# EUROPÄISCHE PATENTANMELDUNG

(11) **EP 3 542 628 A1**
(43) Veröffentlichungstag der Anmeldung: **25.09.2019**
(21) Anmeldenummer: 18163344.7
(22) Anmeldetag: 22.03.2018
(51) Int. Cl.: A01N 33/04, A01P 1/00

(54) **DESINFEKTIONSMITTEL UND VERWENDUNG VON N,N-BIS(3-AMINOPROPYL)ALKYLAMIN IN DESINFEKTIONSMITTELN**

(71) Anmelder: Chemische Fabrik Dr. Weigert GmbH & Co. KG, 20539 Hamburg (DE)
(72) Erfinder: Jerôme Mercanton, 22767 Hamburg (DE); Lenz, Johannes, 22455 Hamburg (DE)
(74) Vertreter: Glawe, Delfs, Moll

(57) **Zusammenfassung**

Gegenstand der Erfindung ist eine Desinfektionsmittellösung umfassend ein *N,N*-Bis(3-aminopropyl)alkylamin mit einem C₆-C₁₈-Alkylrest als einziger Wirkstoffkomponente, wobei die gebrauchsfertige Desinfektionsmittellösung einen pH-Wert in einem Bereich von 9,5 bis 10,3 aufweist.

Gegenstand der Erfindung ist ferner die Verwendung von *N,N-*Bis(3-aminopropyl)alkylamin mit einem C₆-C₁₈-Alkylrest als Wirkstoffkomponente in bakteriziden und tuberkuloziden Desinfektionsmittellösungen mit einem pH-Wert in einem Bereich von 9,5 bis 10,3.

## Beschreibung

Die Erfindung betrifft ein Desinfektionsmittel umfassend *N,N*-Bis(3-aminopropyl)alkylamin und die Verwendung von *N,N-*Bis(3-aminopropyl)alkylamin in bakteriziden und tuberkuloziden Desinfektionsmitteln.

Mikroorganismen sind auf vielen alltäglichen Gegenständen und Oberflächen vorhanden. Zu den Mikroorganismen gehören beispielsweise Bakterien, Pilze, Viren usw. Dabei stellen Mikroorganismen wie der Tuberkuloseerreger *Mycobacterium tuberculosis* immer noch ein großes Problem dar. Dies ist unter anderem darauf zurückzuführen, dass die Zellwand aller Mycobacterium-Arten dicker ist als bei vielen anderen Bakterien, sowie hydrophob, wachsartig und reich an Mykolsäuren/Mykolaten.

Das Anwendungsgebiet von flüssigen Desinfektionsmitteln mit tuberkulozider Wirkung ist daher breit und umfasst: Desinfektion von medizinischen Instrumenten, Desinfektion in der Nahrungsmittelzubereitung und -lieferung, Desinfektion von öffentlichen und privaten Einrichtungen, Händedesinfektion, Wäschedesinfektion und alle Arten von Oberflächendesinfektion und Konservierung von industriellen Flüssigkeiten.

Im Stand der Technik bekannte Desinfektionsmittel mit tuberkulozider Wirksamkeit enthalten häufig einen oder mehrere Wirkstoffe, die aufgrund ihrer toxikologischen Eigenschaften und auftretenden Geruchsproblemen unter verringerter Anwenderakzeptanz leiden. Dies gilt insbesondere für Zusammensetzungen, die Aldehyde und/oder Guanidiniumverbindungen, wie Oligohexamethylenbiguanid, enthalten. Zudem weisen klassische biozide Verbindungen, wie quaternäre Ammoniumchloridverbindungen (QAV), oft gar keine oder nur eine geringe Wirksamkeit gegen Mykobakterien auf, so dass diese in hohen Konzentrationen eingesetzt werden müssen. Auf dem Gebiet der aldehydfreien Desinfektionsmittel sind zudem nur wenige tuberkulozid wirkende Biozide bekannt. Zu ihnen gehört *N*-(3-Aminopropyl)-*N*-dodecylpropan-1,3-diamin, das insbesondere in Flächen- und Instrumentendesinfektionsmitteln eingesetzt wird.

Eine weitere wichtige Anforderung an Desinfektionsmittel ist, dass sie zusätzlich zu einer tuberkuloziden Wirksamkeit auch eine bakterizide Wirksamkeit aufweisen.

EP 0 343 605 A1 offenbart beispielsweise die Verwendung von *N*-(3-Aminopropyl)-*N-*dodecylpropan-1,3-diamin als wirksame Komponente in flüssigen aldehydfreien tuberkuloziden Desinfektionsmitteln. Um sowohl eine bakteriostatische als auch tuberkulozide Wirkung der gebrauchsfertigen Desinfektionsmittellösung mit einem pH-Wert von 10,5 zu erzielen, wird ein hoher Wirkstoffgehalt von 30 Gew.-% benötigt.

DE 198 01 821 A1 offenbart ein tuberkulozides Desinfektionsmittel, das *N,N*'-substituiertes Glycin oder dessen Derivate als Wirkstoffkomponente enthält. Das Desinfektionsmittel kann weiterer Wirkstoffe ausgewählt aus quarternären Ammoniumverbindungen (QAV), Guanidinderivaten, Biguaniden, aromatischen Alkoholen und Aminen enthalten.

WO 2015/078496 offenbart eine Desinfektionsmittellösung mit tuberkulozider, mykobakterizider und antiviraler Wirkung ausgehend von *N*-Alkyldimethylbenzylammoniumchloriden (QAV) in Kombination mit *N*-(3-Aminopropyl)-N-dodecylpropan-1,3-diamin.

Das Desinfektionsmittel Incidin® Pro von Ecolab enthält in 100 g 8,0 g *N*-(3-Aminopropyl)-*N*-dodecylpropan-1,3-diamin, 10,0 g Phenoxyethanol sowie 7,5 g Benzalkoniumchlorid (BAC) als Wirkstoffe.

Um sowohl eine bakterizide als auch tuberkulozide Wirkung zu erzielen, benötigen die im Stand der Technik bekannten Desinfektionsmittellösungen daher einen erhöhten pH-Wert, einen hohen Wirkstoffgehalt und/oder eine Vielzahl von unterschiedlichen Wirkstoffen. Ein erheblicher Nachteil von gebrauchsfertigen Desinfektionsmittellösungen mit erhöhten pH-Werten im mittleren bis stark alkalischen Bereich ist, dass sie zu einem erhöhten Risiko in der Haut- und Materialverträglichkeit führen. Die Verwendung von hohen Wirkstoffkonzentrationen sowie von einer Vielzahl biozider Wirkstoffe ist weder ökonomisch noch ökologisch effizient.

Der Erfindung liegt die Aufgabe zu Grunde, eine Desinfektionsmittellösung zu schaffen, die zugleich eine schnelle bakterizide als auch eine tuberkulozide Wirkung bei nur einem geringem Wirkstoffgehalt aufweist.

Gelöst wird diese Aufgabe durch eine Desinfektionsmittellösung gemäß dem Hauptanspruch. Die Erfindung betrifft somit insbesondere eine Desinfektionsmittellösung umfassend *N,N-*Bis(3-aminopropyl)alkylamin mit einem C₆-C₁₈-Alkylrest als einzige Wirkstoffkomponente, wobei die gebrauchsfertige Desinfektionsmittellösung einen pH-Wert in einem Bereich von 9,5 bis 10,3 aufweist.

Ferner wird die Aufgabe gelöst durch die Verwendung von *N,N*-Bis(3-aminopropyl)alkylamin mit einem C₆-C₁₈-Alkylrest als Wirkstoffkomponente in bakteriziden und tuberkuloziden Desinfektionsmittellösungen mit einem pH-Wert in einem Bereich von 9,5 bis 10,3.

Zunächst seien einige im Rahmen der Erfindung verwendete Begriffe erläutert.

Unter dem Begriff Desinfektionsmittellösung werden im Rahmen der Erfindung Lösungen verstanden, die sowohl zur Desinfektion als auch zur kombinierten Reinigung und Desinfektion geeignet sind und somit vorhandene Keimbelastung verringern.

Erfindungsgemäß wird aus den Bestandteilen des Desinfektionsmittels vorzugsweise ein flüssiges Konzentrat formuliert, das mit Wasser oder mit einem wasserhaltigen Lösungsmittelgemisch zu der gebrauchsfertigen Desinfektionsmittellösung verdünnt werden kann.

Der Begriff einzige Wirkstoffkomponente meint im Rahmen der vorliegenden Erfindung, dass keine oder keine relevanten Mengen an zusätzlichen bioziden Wirkstoffen in der Desinfektionsmittellösung enthalten sind. Hierunter fallen erfindungsgemäß nicht die im Folgenden als Lösungsmittel, Tensid, Alkalikomponente, Säure zum Einstellen des pH-Wertes, Hydrotrop, Korrosionsschutzmittel, Komplexierungsmittel, Duftstoff und Farbstoff genannten Verbindungen. Beispiele für solche zusätzlichen Wirkstoffe sind Aldehyde, wie beispielsweise Formaldehyd, Succinaldehyd, Glutaraldehyd und Glyoxal, quarternäre Ammoniumverbindungen (QAV), wie beispielsweise Alkylbenzyldimethylammoniumchlorid, Dialkyldimethylammoniumchlorid, Alkylethyldimethylammoniumethylsulfat, und Dialkylmethylpolyoxyethylammoniumpropionat, Guanidinderivate, wie beispielsweise Kokospropylendiaminguanidiniumdiacetat, Biguanide, wie beispielsweise Polyhexamethylenbiguanid, Biguanidderivate, wie beispielsweise Chlorhexidin, aromatischen Alkohole, wie 2-Phenoxyethanol und Phenoxypropanole, *N,N*-substituierte Glycine und dessen Derivate sowie weitere Amine.

Die Erfindung hat erkannt, dass überraschenderweise *N,N-*Bis(3-aminopropyl)alkylamin mit einem C₆-C₁₈-Alkylrest, und insbesondere *N*-(3-Aminopropyl)-*N*-dodecylpropan-1,3-diamin, als Wirkstoffkomponente in einer gebrauchsfertigen Desinfektionsmittellösung nur innerhalb eines sehr engen pH-Wertbereiches von etwa 9,5 bis 10,3 sowohl eine schnelle bakterizide Wirksamkeit (getestet nach DIN EN 13727), insbesondere gegen die Bakterien *P. aeruginosa, S. aureus* und *E. hirae,* als auch tuberkulozide Wirksamkeit (getestet nach DIN EN 14348) aufweist. Diese Wirkungen werden auch bereits bei niedrigen Wirkstoffkonzentrationen in der verdünnten gebrauchsfertigen Desinfektionsmittellösung von 0,2 Gew.-% oder weniger (d.h. <10% Wirkstoffgehalt in ≥2%ige Lösung; ≥10% Wirkstoffgehalt in <2%iger Lösung) erreicht. Des Weiteren werden beide Wirksamkeiten auch ohne den Zusatz von weiteren Wirkstoffkomponenten erreicht.

Die vorliegende Erfindung ermöglicht es somit, eine Desinfektionsmittellösung bereitzustellen, die sowohl für eine schnelle bakterizide Wirksamkeit als auch für tuberkulozide Wirksamkeiten keinen erhöhten (mittleren bis stark alkalischen) pH-Wert und/oder keinen hohen Wirkstoffgehalt benötigt. Des Weiteren kann auf die Verwendung von mehreren unterschiedlichen Wirkstoffen in der Desinfektionsmittellösung verzichtet werden. Auf diese Weise wird eine tuberkulozide und bakterizide Desinfektionsmittellösung bereitgestellt, die sehr materialverträglich und zugleich ökonomisch und ökologisch ist.

Es ist bevorzugt, dass die gebrauchsfertige Desinfektionsmittellösung einen pH-Wert in einem Bereich von 9,6 bis 10,2, bevorzugter in einem Bereich von 9,6 bis 10,1, noch bevorzugter in einem Bereich von 9,7 bis 10,0 aufweist.

Bevorzugt ist die Wirkstoffkomponente N-(3-Aminopropyl)-N-dodecylpropan-1,3-diamin.

Es ist bevorzugt, dass eine Konzentration der Wirkstoffkomponente im flüssigen Konzentrat in einem Bereich von 2 bis 15 Gew.%, bevorzugter in einem Bereich von 3 bis 15 Gew.-%, noch bevorzugter in einem Bereich von 5 bis 10 Gew.-%, am meisten bevorzugt in einem Bereich von 7 bis 9,5 Gew.-% liegt.

Ferner ist es bevorzugt, dass eine Konzentration der Wirkstoffkomponente in der gebrauchsfertigen Desinfektionsmittellösung 0,2 Gew.-% oder weniger beträgt, bevorzugter liegt die Konzentration der Wirkstoffkomponente in einem Bereich von 0,02 und 0,2 Gew.-%, noch bevorzugter liegt die Konzentration der Wirkstoffkomponente in einem Bereich von 0,08 und 0,199 Gew.-%, am meisten bevorzugt liegt die Konzentration der Wirkstoffkomponente in einem Bereich von 0,095 und 0,195 Gew.-%.

In einer weiteren vorteilhaften Ausführungsform umfasst die Desinfektionsmittellösung weitere Bestandteile ausgewählt aus der Gruppe bestehend aus Lösungsmitteln, Tensiden, Alkalikomponenten, Säuren zum Einstellen des pH-Wertes, Hydrotropen, Korrosionsschutzmitteln, Komplexierungsmitteln, Duftstoffen, Farbstoffen und Gemischen hiervon umfasst.

Bevorzugt ist, dass das Lösungsmittel Wasser oder ein wasserhaltiges Lösungsmittelgemisch ist. Bevorzugte Lösungsmittelgemische enthalten neben Wasser organische Lösungsmittel ausgewählt aus Ethanol, 2-Propanol und Glykolen. Eine Konzentration an Wasser liegt im flüssigen Konzentrat bevorzugt in einem Bereich von 30 und 95 Gew.-%, bevorzugter in einem Bereich von 50 bis 90 Gew.-%, noch bevorzugter in einem Bereich von 60 bis 85 Gew.-%, am meisten bevorzugt in einem Bereich von 70 bis 85 Gew.-%.

Als Tenside werden im Rahmen der Erfindung Verbindungen bezeichnet, die die Grenzflächenspannung herabsetzen, also amphiphile Verbindungen mit mindestens einem hydrophoben und einem hydrophilen Molekülteil. Im Rahmen der Erfindung sind sämtliche Tenside, wie beispielsweise anionische Tenside, nichtionische Tenside, kationische Tenside, amphotere Tenside und Blockcopolymere (insbesondere aus Ethylenoxid- und Propylenoxideinheiten) verwendbar. Bevorzugt sind kationische Tenside ausgewählt aus Alkylaminen und Polyaminen. Besonders bevorzugt ist ethoxyliertes Alkyldimethylammoniumchlorid. Ein ethoxyliertes Alkyldimethylammoniumchlorid ist beispielsweise Berol® R648 NG von Fa. Akzo Nobel. Bevorzugt sind amphotere Tenside ausgewählt aus Betainen, Propionaten, Sultainen, Glycinaten und Imidazolinen. Besonders bevorzugt sind Natriumcapryliminodipropionat, Alkylamidopropylsulfobetain, Alkyliminodiglycinat und Alkyldimethylbetain. Bevorzugt ist das Tensid ein nichtionisches Tensid. Diese haben den Vorteil, dass sie weniger schäumen als die übrigen Tenside. Noch bevorzugter ist das nichtionische Tensid ausgewählt aus Alkylalkoxylaten, Alkylphenolethoxylaten, Fettalkoholalkoxylaten, Fettsäureamiden, Fettsäurealkoxylaten, Fettsäurealkylester und deren ethoxylierten Derivaten, Fettaminen und deren ethoxylierten Derivaten, Alkylpolyaminen, wie beispielsweise Alkylpropylendiamin, Fettamidethoxylaten, Aminoxiden, Alkylpolyglykosiden und Gemischen hiervon. Am meisten bevorzugt ist das nichtionische Tensid ein Alkylpolyglykosid. Eine Konzentration an Tensid liegt im flüssigen Konzentrat bevorzugt in einem Bereich von 0,5 bis 15 Gew.-%, noch bevorzugter in einem Bereich von 1 bis 10 Gew.-%. Einige der genannten Tenside, können gleichzeitig auch als Lösungsvermittler dienen. Ein Beispiel hierfür ist das ethoxylierte Alkyldimethylammoniumchlorid Berol® R648 NG.

Eine Alkalikomponente ist im Rahmen der Erfindung eine alkalische Verbindung, die es ermöglicht den pH-Wert der Desinfektionsmittellösung entsprechend einzustellen. Bevorzugt ist die Alkalikomponente ausgewählt aus Alkanolaminen, Alkalihydroxiden, Alkalisalzen und Gemischen hiervon. Noch bevorzugter ist die Alkalikomponente ausgewählt aus Triethanolamin, Diethanolamin, Monoethanolamin, Monoisopropanolamin, Natriumhydroxid, Kaliumhydroxid, Natriumcarbonat, Kaliumcarbonat, Natriumphosphat, Natriumsilikat, Kaliumsilikat und Gemische hiervon. Besonders bevorzugt sind Monoethanolamin und Monoisopropanolamin. Die Konzentration an Alkalikomponente liegt im flüssigen Konzentrat bevorzugt in einem Bereich von 0,5 bis 15 Gew.-%, noch bevorzugter in einem Bereich von 0,6 bis 7 Gew.-%.

Ferner ist es bevorzugt, dass die Säure zum pH-Einstellen eine anorganische oder organische Säure ist. Bevorzugt ist eine organische Säure wie Zitronensäure, Weinsäure, Äpfelsäure, Milchsäure, Glykolsäure, Glyoxylsäure, Bernsteinsäure, Adipinsäure, Glutarsäure oder Gemische hiervon. Zitronensäure ist besonders bevorzugt. Die Säure wird dem flüssigen Konzentrat bevorzugt in einer Konzentration von 0,5 bis 15 Gew.-%, noch bevorzugter von 0,6 bis 7 Gew.-% zugesetzt. Einige der genannten organischen Säuren, wie beispielsweise Zitronensäure, können gleichzeitig auch als Komplexbildner dienen.

Es ist bevorzugt, dass der Hydrotrop (Lösungsvermittler) ausgewählt ist aus der Gruppe bestehend aus aromatischen Sulfonatverbindungen, insbesondere Natriumcumolsulfonat, Natriumtoluolsulfonat und Natriumxylolsulfonat, Glykolen, insbesondere Polypropylenglykole und Polyethylenglykole, Methylacetamid, Harnstoff, Alkohole, wie Ethanol, 2-Propanol, 2-Butoxyethanol und Glycerin, und Fettalkoholen. Die Konzentration an Hydrotrop liegt im flüssigen Konzentrat bevorzugt in einem Bereich von 0,05 bis 15 Gew.-%, noch bevorzugter von 0,1 bis 10 Gew.-%.

Bevorzugt ist das Korrosionsschutzmittel ausgewählt aus der Gruppe bestehend aus Silikat, Natriumsilikat, Natriumdisilikat, Calciumacetat, Calciumchlorid , Calciumgluconat, Calciumphosphat, Calciumborat, Calciumcarbonat, Calciumcitrat, Calciumlactat, Calciumsulfat, Calciumtartrat, Benzotriazol und Gemischen hiervon. Besonders bevorzugt ist 1,2,3-Benzotriazol. Eine Konzentration an Korrosionsschutzmittel liegt im flüssigen Konzentrat bevorzugt in einem Bereich von 0,05 bis 10 Gew.-%, noch bevorzugter in einem Bereich von 0,1 bis 5 Gew.-%.

Bevorzugt ist das Komplexierungsmittel ausgewählt aus der Gruppe bestehend aus Phosphaten, Phosphonaten, Polymeren, wie beispielsweise Polyacrylsäuren und deren Salze, Natriumgluconat, Natriumglucoheptonat, Diethanolglycinnatriumsalz, Ethanoldiglycindinatriumsalz, Hydroxycarbonsäureverbindungen und deren Salze, Aminocarbonsäuren und deren Salze, wie beispielsweise Diethylentriaminpentaessigsäure (DTPA), Ethylendiamintetraessigsäure (EDTA), Nitrilotriessigsäure (NTA), Iminodibernsteinsäure (IDA), Ethylendiamindibernsteinsäure (EDDS), Hydroxyiminodibernsteinsäure, Glutaminsäure-*N,N*-diessigsäure (GLDA), (Hydroxyethyl)ethylen-diamintriessigsäure (HEDTA), Methylglycindiessigsäure (MGDA) und Gemischen hiervon. Besonders bevorzugt sind Methylglycindiessigsäure und deren Salze. Eine Konzentration an Komplexierungsmittel liegt im flüssigen Konzentrat bevorzugt in einem Bereich von 0,1 bis 10 Gew.-%, noch bevorzugter von 0,5 bis 5 Gew.-%.

In einer Ausführungsform der Erfindung sind bevorzugt in der Desinfektionsmittellösung nicht enthalten Aldehyde, wie insbesondere Formaldehyd, Succinaldehyd, Glutaraldehyd und Glyoxal, quarternäre Ammoniumverbindungen (QAV), wie insbesondere Alkylbenzyldimethylammoniumchlorid, Dialkyldimethylammoniumchlorid, Alkylethyldimethylammoniumethylsulfat, und Dialkylmethylpolyoxyethylammoniumpropionat, Guanidinderivate, wie insbesondere Kokospropylendiaminguanidiniumdiacetat, Biguanide, wie insbesondere Polyhexamethylenbiguanid, Biguanidderivate, wie Chlorhexidin, aromatischen Alkohole, wie insbesondere Phenoxypropanole und 2-Phenoxyethanol, *N,N*-substituierte Glycine und dessen Derivate sowie weitere Amine.

Gegenstand der Erfindung ist ferner die Verwendung von *N,N-*Bis(3-aminopropyl)alkylamin mit einem C₆-C₁₈-Alkylrest als Wirkstoffkomponente in bakteriziden und tuberkuloziden Desinfektionsmittellösungen mit einem pH-Wert in einem Bereich von 9,5 bis 10,3.

Es ist bevorzugt, dass der pH-Wert in einem Bereich von 9,6 bis 10,2, bevorzugter in einem Bereich von 9,6 bis 10,1, noch bevorzugter in einem Bereich von 9,7 bis 10,0 aufweist.

Bevorzugt ist, dass das *N,N*-Bis(3-aminopropyl)alkylamin mit einem C₆-C₁₈-Alkylrest *N*-(3-Aminopropyl)-N-dodecylpropan-1,3-diamin ist.

Die Konzentration der Wirkstoffkomponente liegt in einem flüssigen Konzentrat bevorzugt in einem Bereich von 2 bis 15 Gew.-%, bevorzugter in einem Bereich von 3 bis 15 Gew.-%, noch bevorzugter in einem Bereich von 5 bis 10 Gew.-%, am meisten bevorzugt in einem Bereich von 7 bis 9,5 Gew.-%.

Die Konzentration der Wirkstoffkomponente in einer verdünnten gebrauchsfertigen Desinfektionsmittellösung beträgt bevorzugt 0,2 Gew.-% oder weniger beträgt, bevorzugter liegt die Konzentration der Wirkstoffkomponente in einem Bereich von 0,02 und 0,2 Gew.-%, noch bevorzugter liegt die Konzentration der Wirkstoffkomponente in einem Bereich von 0,08 und 0,199 Gew.-%, am meisten bevorzugt liegt die Konzentration der Wirkstoffkomponente in einem Bereich von 0,095 und 0,195 Gew.-%.

Es ist bevorzugt, dass das *N*,*N*-Bis(3-aminopropyl)-alkylamin mit einem C₆-C₁₈-Alkylrest die einzige Wirkstoffkomponente in der Desinfektionsmittellösung ist.

In einer alternativen Ausführungsform ist es bevorzugt, dass neben der Wirkstoffkomponente *N,N*-Bis(3-aminopropyl)-alkylamin mit einem C₆-C₁₈-Alkylrest mindestens eine weitere Wirkstoffkomponente in der Desinfektionsmittellösung vorhanden ist, die bevorzugt ausgewählt ist aus quarternären Ammoniumverbindungen (QAV), Guanidinderivaten, Biguaniden, Biguanidderivaten, aromatischen und kurzkettigen Alkoholen, weiteren Aminen, *N*,*N'*-substituierten Glycinen und *N,N'-*substituierten Glycinderivaten. In einer besonders bevorzugten Ausführungsform ist die weitere Wirkstoffkomponente *N*,*N'*-substituiertes Glycin oder *N*,*N'*-substituiertes Glycinderivat, bevorzugter *N*-Alkylaminopropylglycin oder *N*-(3-Aminopropyl)-*N*'-alkylderivat, noch bevorzugter *N*-Alkylaminopropylglycin mit einem C₁₀-C₁₆-Alkylrest oder *N-(*3-Aminopropyl)-*N'*-alkylderivat mit einem C₁₀-C₁₆-Alkylrest. Die Konzentration der weiteren Wirkstoffkomponente liegt bevorzugt im flüssigen Konzentrat in einem Bereich von 0,5 und 35 Gew.-%, bevorzugter von 0,6 bis 15 Gew.-%, noch bevorzugter 0,7 bis 7 Gew.-%.

Die erfindungsgemäße Desinfektionsmittellösung kann mit weiteren Merkmalen fortgebildet werden, die im Zusammenhang der erfindungsgemäßen Verwendung von *N,N*-Bis(3-aminopropyl)-alkylamin als Wirkstoffkomponente in bakteriziden und tuberkuloziden Desinfektionsmittellösungen beschrieben sind. Letzteres kann wiederum mit weiteren Merkmalen fortgebildet werden, die im Zusammenhang mit der erfindungsgemäßen Desinfektionsmittellösung beschrieben sind.

Die Erfindung wird nun anhand vorteilhafter Ausführungsformen erläutert.

### 1) Untersuchung des Wirkstoffes N-(3-Aminopropyl)-N-dodecylpropan-1,3-diamin

Es wurden vier Proben allein mit dem Wirkstoff *N*-(3-Aminopropyl)-*N*-dodecylpropan-1,3-diamin (Rohstoff Lonzabac 12) in Wasser (WSH-Wasser gemäß DIN EN 13727) jeweils in einer Konzentration von 0,2 Gew.-% (d.h. 2000 ppm) mit verschiedenen pH-Werten (9,20; 9,65; 10,05; 10,50) auf die tuberkulozide und bakterizide Wirksamkeit getestet. Die Einstellung des pH-Wertes erfolgte mittels Natriumhydroxid (1 Mol) oder Essigsäure (1 Mol).

**Tabelle 1: Tuberkulozide und bakterizide Wirksamkeit von N-(3-Aminopropyl)-N-dodecylpropan-1,3-diamin.**

| | **Tuberkulozidie (EN 14348)** | **Bakterizidie (EN 13727)** |
|---|---|---|
| pH 10,50 | >6,83 - wirksam | 4,88 - nicht wirksam |
| pH 10,05 | >6,83 - wirksam | 5,28 - wirksam |
| pH 9,65 | 5,76 - wirksam | >5,36 - wirksam |
| pH 9,20 | 3,49 - nicht wirksam | >5,36 - wirksam |

Die dargestellten Versuchsergebnisse belegen eindeutig, dass *N*-(3-Aminopropyl)-*N*-dodecylpropan-1,3-diamin lediglich in einem pH-Wertbereich von etwa 9,5 bis 10,3 sowohl eine bakterizide als auch eine tuberkulozide Wirksamkeit aufweist.

### 2) Untersuchung der Desinfektionsmittellösungen

Im folgenden Abschnitt werden Beispielformulierungen für die erfindungsgemäßen Desinfektionsmittellösungen sowie entsprechende Untersuchungen zu dessen Wirksamkeit, Reinigungseffizienz und Materialverträglichkeit dargestellt und diskutiert.

### a) Zusammensetzung im flüssigen Konzentrat

Tabelle 2 zeigt dabei die einzelnen Bestandteile eines Vergleichsbeispiel (Vergl.) und der erfindungsgemäßen Desinfektionsmittellösung (Bsp.1 bis 5) jeweils formuliert als flüssiges Konzentrat, das erst mit Wasser oder mit einem wasserhaltigen Lösungsmittelgemisch verdünnt zu der gebrauchsfertigen Desinfektionsmittellösung wird.

**Tabelle 2: Zusammensetzungen der Desinfektionsmittellösung als flüssige Konzentrate.**

| **Komponenten Gew.-%** | **Verg1.** | **Bsp.1** | **Bsp.2** | **Bsp.3** | **Bsp.4** | **Bsp.5** |
|---|---|---|---|---|---|---|
| *N-*(3-Aminopropyl)-*N-*dodecylpropan-1,3-diamin | 10,0 | 8,0 | 9,0 | 8,0 | 9,0 | 9,0 |
| Isopropanol (49% in Wasser) | 7,0 | - | - | - | - | - |
| Phenoxyethanol | 15,0 | - | - | - | - | - |
| MDGA | 2,4 | 0,8 | - | - | - | - |
| Zitronensäure, 1 Aq. | - | - | 2,9 | 2,7 | 2,8 | 2,9 |
| 1,2,3-Benzotriazol | - | 0,2 | - | 0,2 | - | - |
| Monoethanolamin | - | 3,5 | - | 3,5 | - | - |
| NaOH (45%ig) | - | - | - | - | - | 2,1 |
| Monoisopropanolamin | - | - | 3,5 | - | 3,5 | - |
| *N*-(3-Amino-propyl)-*N'-*alkylglycin, 30% (Rewocid WK 30) | - | 13,0 | - | 3,1 | 3,1 | 3,1 |
| Isotridecylalkohol-ethoxylat (9EO), 90% | 8,0 | - | - | - | - | - |
| C12/C14 Alkoholalkoxylat | 1,0 | - | - | - | - | - |
| Butyldiglykol | 8,0 | - | - | - | - | - |
| Wasser | auf 100 Gew.-% | auf 100 Gew.-% | auf 100 Gew.-% | auf 100 Gew.-% | auf 100 Gew.-% | auf 100 Gew.-% |
| pH (Konzentrat) | 9,7 | 10,7 | 10,1 | 10,1 | 10,1 | 10,1 |
| pH (2%ige Lösung) | 9,0 | 10,1 | 9,6 | 9,6 | 9, 6 | 9, 6 |

### b) Tuberkulose Aktivität nach EN 14348 (60 Minuten)

Es wurden quantitative Suspensionsversuche zur Bestimmung der tuberkuloziden Wirkung von chemischen Desinfektionsmitteln nach DIN EN 14348 durchgeführt.

### Versuchsparameter:

- Erforderliche log-Reduktion >4.0
- Testorganismen: *Mycobacterium terrae*
- Temperatur: 20°C
- Hohe organische Beladung

### Ergebnisse:

Das Vergleichsbeispiel weist in der verdünnten gebrauchsfertigen Desinfektionsmittellösung einen pH-Wert von weniger als 9,5 auf und zeigt als einziges Desinfektionsmittel keine tuberkulozide Wirksamkeit. Die übrigen Desinfektionsmittellösungen der Beispiele 1 bis 5 zeigen allesamt tuberkulozide Aktivität.

**Tabelle 3: Tuberkulozidie nach EN 14348, 4 log-Reduktion nach 60 min (intern).**

| Beispiel | Konzentration | |
|---|---|---|
| | 1,0% | 2,0% |
| Beispiel 2 | 4,04 | 5,22 |
| Beispiel 4 | 4,63 | 5,51 |
| Beispiel 5 | 4,22 | 5,10 |

Durch einen Vergleich der Beispiele 2 und 5 wird ersichtlich, dass die Kombination von *N*-(3-Aminopropyl)-N-dodecylpropan-1,3-diamin und Alkanolamin nicht zwingend erforderlich ist, um die gewünschten Wirksamkeiten zu erhalten. Gemäß EP 1 322 156 A1 erzeugt die Kombination *N*-(3-Aminopropyl)-N-dodecylpropan-1,3-diamin und Alkanolamin einen synergetischen Effekt, der sich in einer Steigerung der fungiziden Wirksamkeit äußert. Ein solcher synergistischer Effekt kann vorliegend nicht beobachtet werden.

Anhand der Beispiele 2 und 4 wird deutlich, dass der Zusatz einer weiteren Wirkstoffkomponente nicht zwingend die Wirksamkeiten verbessert.

### c) Bakterizide Wirksamkeit nach EN 13727 (5 Minuten)

Es wurden quantitative Suspensionsversuche zur Bestimmung der bakteriziden Wirkung von chemischen Desinfektionsmitteln nach DIN EN 13727 durchgeführt.

### Versuchsparameter:

- Erforderliche log-Reduktion >5.0
- Testorganismen: *Pseudomonas aeruginosa, Staphylococcus aureus* und *Enterococcus hirae*
- Temperatur: 20°C
- Hohe organische Beladung

### Ergebnisse:

Eine bakterizide Wirksamkeit für die Desinfektionsmittellösung des Vergleichsbeispiels konnte nicht bestimmt werden.

Die verdünnte gebrauchsfertige Desinfektionsmittellösung (5%ige Anwendungslösung), erhalten aus dem Konzentrat aus Beispiel 1, zeigt bei Konzentrationen an *N*-(3-Aminopropyl)-N-dodecylpropan-1,3-diamin von etwa 0,4 Gew.-% (> 4000 ppm) bakterizide Wirksamkeit.

Die verdünnten gebrauchsfertigen Desinfektionsmittellösungen (0,5%ige Anwendungslösung), erhalten aus den Konzentraten der Beispiele 2 bis 5, zeigen jeweils bei Wirkstoffkonzentrationen von mehr als 0,045 Gew.-% (>450 ppm) bakterizide Wirksamkeit.

**Tabelle 4: Bakterizidie nach EN 13727, 5 log-Reduktion nach 5 min (intern).**

| Beispiel | Konzentration | |
|---|---|---|
| | 0,25% | 0,5% |
| Beispiel 2 | 3,23 | >5,36 |
| Beispiel 4 | 5,23 | >5,24 |
| Beispiel 5 | >5,36 | >5,36 |

Durch ein Vergleich der Beispiele 2 und 5 wird ersichtlich, dass die Kombination von *N*-(3-Aminopropyl)-N-dodecylpropan-1,3-diamin und Alkanolamin nicht zwingend erforderlich ist, um die gewünschten Wirksamkeiten zu erhalten. Gemäß EP 1 322 156 A1 erzeugt die Kombination *N*-(3-Aminopropyl)-*N-*dodecylpropan-1,3-diamin und Alkanolamin einen synergetischen Effekt, der sich in einer Steigerung der fungiziden Wirksamkeit äußert. Ein solcher synergistischer Effekt kann vorliegend nicht beobachtet werden.

An Hand der Beispiele 2 und 4 wird deutlich, dass der Zusatz einer weiteren Wirkstoffkomponente nicht zwingend die Wirksamkeiten verbessert.

### d) Reinigungswirkungeffizienz - Blutflecken

Die erfindungsgemäßen Desinfektionsmittellösungen zeigten im Vergleich zu den im Stand der Technik bekannten Desinfektionsmitteln Incidin® Pro und Optisal® Plus verbesserte Resultate bei der Reinigung von Blutflecken.

### e) Materialverträglichkeit

Die 2%igen Anwendungslösungen der erfindungsgemäßen Desinfektionsmittellösung mit einem pH-Wert in einem Bereich von 9,5 bis 10,3 zeigten bei Untersuchungen zur Materialverträglichkeit, dass die Materialverträglichkeit im Vergleich zu bekannten Desinfektionsmitteln mit einem höheren pH-Wert, wie beispielsweise Optisal® plus (pH 11) und Lonzaguard DR-70 (Konzentrat pH 12,4), deutlich gesteigert wird. Dieses galt auch dann, wenn die Vergleichslösungen als 0,5%ige Anwendungslösung vorlag.

## Patentansprüche

1. Desinfektionsmittellösung umfassend *N*,*N*-Bis(3-aminopropyl)alkylamin mit einem C₆-C₁₈-Alkylrest als einziger Wirkstoffkomponente, wobei die gebrauchsfertige Desinfektionsmittellösung einen pH-Wert in einem Bereich von 9,5 bis 10,3 aufweist.

2. Desinfektionsmittellösung nach Anspruch 1, **dadurch gekennzeichnet, dass** die Wirkstoffkomponente *N*-(3-Aminopropyl)-*N*-dodecylpropan-1,3-diamin ist.

3. Desinfektionsmittellösung nach Anspruch 1 oder 2, **dadurch gekennzeichnet, dass** eine Konzentration der Wirkstoffkomponente in der gebrauchsfertigen Desinfektionsmittellösung 0,2 Gew.-% oder weniger beträgt, bevorzugter liegt die Konzentration der Wirkstoffkomponente in einem Bereich von 0,02 und 0,2 Gew.-%, noch bevorzugter liegt die Konzentration der Wirkstoffkomponente in einem Bereich von 0,08 und 0,199 Gew.-%, am meisten bevorzugt liegt die Konzentration der Wirkstoffkomponente in einem Bereich von 0,095 und 0,195 Gew.-%.

4. Desinfektionsmittellösung nach einem der Ansprüche 1 bis 3, **dadurch gekennzeichnet, dass** die Desinfektionsmittellösung weitere Bestandteile ausgewählt aus der Gruppe bestehend aus Lösungsmitteln, Tensiden, Alkalikomponenten, Säuren zum Einstellen des pH-Wertes, Hydrotropen, Korrosionsschutzmitteln, Komplexierungsmitteln, Duftstoffen, Farbstoffen und Gemischen hiervon umfasst.

5. Desinfektionsmittellösung nach Anspruch 4, **dadurch gekennzeichnet, dass** das Lösungsmittel Wasser oder ein wasserhaltiges Lösungsmittelgemisch ist.

6. Desinfektionsmittellösung nach Anspruch 4 oder 5, **dadurch gekennzeichnet, dass** das Tensid ein nichtionisches Tensid ist.

7. Desinfektionsmittellösung nach einem der Ansprüche 4 bis 6, **dadurch gekennzeichnet, dass** die Alkalikomponente ausgewählt ist aus Alkanolaminen, Alkalihydroxiden, Alkalisalzen und Gemischen hiervon.

8. Desinfektionsmittellösung nach einem der Ansprüche 4 bis 7, **dadurch gekennzeichnet, dass** die Säure zum pH-Einstellen Zitronensäure ist.

9. Desinfektionsmittellösung nach einem der Ansprüche 4 bis 8, **dadurch gekennzeichnet, dass** der Hydrotrop ausgewählt ist aus der Gruppe bestehend aus aromatischen Sulfonatverbindungen, Glykolen, Methylacetamid und Fettalkoholen.

10. Verwendung von *N,N*-Bis(3-aminopropyl)alkylamin mit einem C₆-C₁₈-Alkylrest als Wirkstoffkomponente in bakteriziden und tuberkuloziden Desinfektionsmittellösungen mit einem pH-Wert in einem Bereich von 9,5 bis 10,3.

11. Verwendung nach Anspruch 10, **dadurch gekennzeichnet, dass** das *N,N*-Bis(3-aminopropyl)alkylamin mit einem C₆-C₁₈-Alkylrest *N*-(3-Aminopropyl)-N-dodecylpropan-1,3-diamin ist.

12. Verwendung nach Anspruch 10 oder 11, **dadurch gekennzeichnet, dass** die Konzentration der Wirkstoffkomponente in der gebrauchsfertigen Desinfektionsmittellösung 0,2 Gew.-% oder weniger beträgt, bevorzugter liegt die Konzentration der Wirkstoffkomponente in einem Bereich von 0,02 und 0,2 Gew.-%, noch bevorzugter liegt die Konzentration der Wirkstoffkomponente in einem Bereich von 0,08 und 0,199 Gew.-%, am meisten bevorzugt liegt die Konzentration der Wirkstoffkomponente in einem Bereich von 0,095 und 0,195 Gew.-%.

13. Verwendung nach einem der Ansprüche 10 bis 12, **dadurch gekennzeichnet, dass** das *N,N*-Bis(3-aminopropyl)-alkylamin mit einem C₆-C₁₈-Alkylrest die einzige Wirkstoffkomponente in der Desinfektionsmittellösung ist.

14. Verwendung nach einem der Ansprüche 10 bis 12, **dadurch gekennzeichnet, dass** neben der Wirkstoffkomponente *N*,*N*-Bis (3-aminopropyl)-alkylamin mit einem C₆-C₁₈-Alkylrest mindestens eine weitere Wirkstoffkomponente in der Desinfektionsmittellösung vorliegt, bevorzugt ausgewählt aus quarternären Ammoniumverbindungen (QAV), Guanidinderivaten, Biguaniden, aromatischen und kurzkettigen Alkoholen, weiteren Aminen, *N,N'-*substituierten Glycinen und *N*,*N*'-substituierten Glycinderivaten.

15. Verwendung nach Anspruch 14, **dadurch gekennzeichnet, dass** die weitere Wirkstoffkomponente *N,N'-*substituiertes Glycin oder *N*,*N'*-substituiertes Glycinderivat, bevorzugt *N*-Alkylaminopropylglycin oder *N*-(3-Aminopropyl)-*N*'-alkylderivat, noch bevorzugter *N-*Alkylaminopropylglycin mit einem C₁₀-C₁₆-Alkylrest oder *N*-(3-Aminopropyl)-*N'*-alkylderivat mit einem C₁₀-C₁₆-Alkylrest ist.
